Europäisches Patentamt

European Patent Office

Office européen des brevets

(19)

(11) Publication number: **0 121 629**
**B1**

(12) **EUROPEAN PATENT SPECIFICATION**

(45) Date of publication of patent specification: **30.03.88**

(51) Int. Cl.⁴: **F 16 B 13/02**

(21) Application number: **83307272.1**

(22) Date of filing: **29.11.83**

(54) Tunnel lining fastening devices.

(30) Priority: **08.12.82 GB 8235005**

(43) Date of publication of application:
**17.10.84 Bulletin 84/42**

(45) Publication of the grant of the patent:
**30.03.88 Bulletin 88/13**

(84) Designated Contracting States:
**AT BE CH DE FR IT LI LU NL SE**

(56) References cited:
**DE-A-1 400 218**
**DE-B-1 230 265**
**DE-U-6 610 783**
**DE-U-7 102 883**
**DE-U-7 235 264**
**FR-E- 15 252**
**GB-A-1 422 967**
**US-A-3 014 399**
**US-A-3 461 772**
**US-A-3 779 495**

(73) Proprietor: **CHARCON TUNNELS LIMITED**
**P.O. Box 1 Southwell Lane**
**Kirkby-in-Ashfield Nottinghamshire NG17 8GQ**
**(GB)**

(72) Inventor: **Horncy, Thomas Eric**
**"Meadowside" Tremeer Lane**
**St. Tudy Cornwall (GB)**

(74) Representative: **Bayliss, Geoffrey Cyril et al**
**BOULT, WADE & TENNANT 27 Furnival Street**
**London EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to tunnel lining fastening devices and is particularly although not exclusively applicable to fastening devices for use in tunnel linings as described and illustrated in our GB—A—2004931.

GB—A—2004931 describes and illustrates a number of different fastening devices for locking pairs of tunnel lining segments together, the fastening devices being driven through projecting overlapping hoops on the respective segment ends. The device as disclosed comprises axially driven tapered pins or wedge elements which rely on friction to hold the pins or elements in place once driven into position or screw-threaded devices which require a very substantial torque in order to impose any significant degree of compression between the segment ends and also require a tool for turning the screw-threaded elements which, if it is a hand tool, can be difficult to operate at the concave surface of the tunnel lining if it is to have sufficient leverage.

DE—U—7235264 discloses a fastening device comprising a plain cylindrical collet sleeve having separable elements held together by a spring ring located in an encircling groove on the sleeve. The sleeve has frusto-conical counter-bores at either end thereof and a tapered bolt extends through the sleeve with a tapered fitting at one end to engage in one frusto-conical end of the sleeve and a tapered nut engaging a screw-threaded end of the bolt at the other end to engage in the other frusto-conical end of the sleeve. Tightening of the bolt draws the nut towards the sleeve to expand the collet. The arrangement does not lend itself to situations in which the collet must first be driven forcibly into an aperture before the collet can be expanded. Moreover a device requiring operation of a screw-thread is generally not suitable for use in applications such as the connection of tunnel lining segments in which the screw-thread is likely to become clogged with spoil resulting from the tunnel excavation.

The invention provides a tunnel lining fastening device comprising a cylindrical collet having a plurality of separable elements resiliently held together by a spring ring engaged in a groove encircling the collet, the collet having a bore extending through the collet from one end thereof to the other end and reducing in diameter from said one end of the collet, a pin having a taper complementary to the bore engageable in the bore, the pin being movable into the bore in the direction of reducing diameter to expand the collet and means being provided for holding the pin in a required position of adjustment in the bore to resist movement of the pin out of the bore allowing contraction of the collet; wherein the collet has an enlarged head of greater diameter than the remaining part of the collet at said one end thereof, the head being formed with said encircling groove around the outer periphery thereof to receive the spring ring holding the collet elements together prior to insertion in an aperture; and wherein the means on the pin and collet bore to hold the pin in a required position of adjustment along the bore comprise a multiplicity of inter-locking abutment means formed at spaced locations along the pin and collet bore to inter-engage and resist movement of the pin out of the collet bore, whereby the pin can be driven into the tapered bore in the collet to expand the collet after the collet has been inserted in an aperture and the interlocking means hold the pin in the collet.

The following is a specific description of one embodiment of the invention, reference being made to the accompanying drawings in which:

Figure 1 shows three views of a fastening device for coupling tunnel lining segments in three different positions of assembly; and

Figure 2 illustrates the separate components of the fastening device.

Referring to the drawings, there is shown a fastening device for use in coupling tunnel lining segments and in particular for coupling segments of the form described and illustrated in our U.K. Patent No. 2004931. In that specification, tunnel lining segments are described which are coupled at their circumferential ends by means of pins. Each end of each segment has two semi-cylindrical grooves extending from the inner side partway across the end of the segment one groove having a pair of projecting tensile hoops bridging the groove and the other groove having a single tensile hoop. The hoops on one segment end overlap with the corresponding hoops on an adjacent segment end and pins are driven into the grooves through the hoops to lock the segment ends together in compression. Our above patent specification described a number of forms of pin for that purpose and the following description relates to a further form of pin or fastening device for that purpose.

Referring now to the drawings, there is shown a fastening device comprising a cylindrical collet 10 having a head 11 at one end thereof. The collet is formed in two separable elements 10a, 10b and the split line between the two elements which passes through the axis of the collet is indicated at 12. The head 11 of the collet is formed with an encircling peripheral groove 13 in which a spring ring 14 is located to hold the two elements together. The end of the collet remote from the head 11 is formed with a chamfer 10c to facilitate insertion of the collet end through the overlapping hoops of the segment.

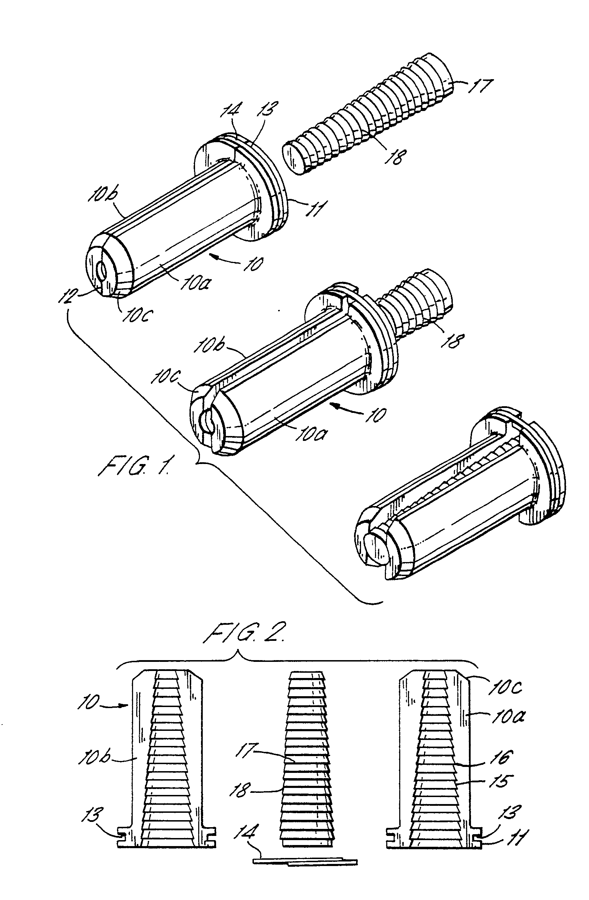

As best seen in Figure 2 of the drawings, the collet 10 is formed with a bore 15 which tapers from the headed end of the collet to the chambered end. The bore is formed with a multiplicity of annular steps 16 spaced along the bore and facing towards the chamfered end of the collet. A tapered pin 17 is engageable in the collet and is likewise formed with a multiplicity of annular steps 18 spaced apart along its length and which face towards the larger end of the pin. Thus when the pin is driven into the collet as illustrated in Figure 1 to expand the collet, the steps on the pin engage with the corresponding steps in the bore of the collet to resist movement of the pin out of the collet.

In use the collet without the pin is driven through the overlapping hoops in a pair of segment ends and then a tapered pin is driven into the collet to expand the collet and, by acting on the hoop, to draw the segment ends into engagement and to compress and hold the segment ends together. By virtue of the inter-engagement of the steps on the pin with the on the bore of the collet, there is no tendency for the pin to work its way out of the collet.

## Claims

1. A tunnel lining fastening device comprising a cylindrical collet (10) having a plurality of separable elements (10a, 10b) resiliently held together by a spring ring (14) engaged in a groove (13) encircling the collet, the collet having a bore (15) extending through the collet from one end thereof to the other end and reducing in diameter from said one end of the collet, a pin (17) having a taper complementary to the bore engageable in the bore, the pin being movable into the bore in the direction of reducing diameter to expand the collet and means being provided for holding the pin in a required position of adjustment in the bore to resist movement of the pin out of the bore allowing contraction of the collet: characterised in that the collet has an enlarged head (11) of greater diameter than the remaining part of the collet at said one end thereof, the head being formed with said encircling groove (13) around the outer periphery thereof to receive the spring ring (14) holding the collet elements together prior to insertion in an aperture; and in that the means on the pin and collet bore to hold the pin in a required position of adjustment along the bore comprise a multiplicity of inter-locking abutment means formed at spaced locations along the pin and collet bore to inter-engage and resist movement of the pin out of the collet bore, whereby the pin can be driven into the tapered bore in the collet to expand the collet after the collet has been inserted in an aperture and the interlocking means hold the pin in the collet.

2. A tunnel lining fastening device as claimed in claim 1, characterised in that the interlocking means comprise a number of annular stepped shoulders (16) on the tapered bore (15) in the collet spaced along the bore and facing towards the tapered end thereof and a number of corresponding stepped annular shoulders (18) on the tapered pin (17) spaced along the pin and facing towards the larger end thereof to interlock with the shoulders on the bore.

3. A fastening device as claimed in claim 1 or claim 2 wherein the collet (10) comprises two separable elements (10a, 10b).

## Patentansprüche

1. Befestigungsvorrichtung zum Tunnelausbau, bestehend aus einer zylindrischen Spreizhülse (10) mit einer Vielzahl von lösbaren Elementen (10a, 10b), die durch einen Federring (14) elastisch zusammengehalten werden, der in einer Nut (13), die die Spreizhülse umgibt, eingreift, wobei die Spreizhülse eine Bohrung (15) aufweist, die durch die Spreizhülse von einem Ende zu anderen verläuft und im Durchmesser vom einen Ende der Spreizhülse reduziert ist, einem Bolzen (17), der eine der Bohrung entsprechende Kegelform aufweist und in die Bohrung hineinpaßt, wobei der Bolzen in der Bohrung in Richtung des reduzierten Durchmessers bewegbar ist, um die Spreizhülse auseinanderzudrücken, und Vorrichtungen zum Halten des Bolzens in einer Arretierposition in der Bohrung, die erforderlich ist, um zu verhindern, daß der Bolzen aus der Bohrung rutscht und dadurch die Kontraktion der Spreizhülse ermöglicht, dadurch gekennzeichnet, daß die Spreizhülse einen vergrößerten Kopf (11) mit einem größeren Durchmesser als ihr restlicher Teil an einem ihrer Enden aufweist, daß der Kopf mit einer umlaufenden Nut (13) auf seinem äußeren Umfang zur Aufnahme des Federrings (14) versehen ist, der die Spreizhülsenelemente vor der Einführung in eine Öffnung zusammenhält, und daß die Vorrichtungen auf dem Bolzen und in der Spreizhülsenbohrung zum Halten des Bolzens in der erforderlichen Arretierungsstellung längs der Bohrung eine Vielzahl von einander blockierenden Widerlagern umfassen, die an aufgeteilten Positionen längs des Bolzens und der Spreizhülsenbohrung ausgebildet sind, um miteinander einzugreifen und eine Bewegung des Bolzens aus der Spreizhülsenbohrung hinaus zu verhindern, wobei der Bolzen in die kegelförmige Bohrung der Spreizhülse eintreibbar ist, um die Spriezhülse auseinanderzudrücken, nachdem die Spreizhülse in eine Öffnung eingesetzt worden ist und wobei die einander blockierenden Vorrichtungen den Bolzen in der Spreizhülse halten.

2. Befestigungsvorrichtung zum Tunnelausbau nach Anspruch 1, dadurch gekennzeichnet, daß die einander blockierenden Vorrichtungen eine Anzahl von ringförmigen Stufen (16) umfassen, die in der kegelförmigen Bohrung (15) der Spreizhülse längs der Bohrung verteilt angeordnet und in Richtung ihres kegelförmigen Endes geneigt sind, und daß sie eine Anzahl von entsprechenden ringförmigen Stufen (18) auf dem kegelförmigen Bolzen (17) umfassen, die längs des Bolzens verteilt angeordnet und in Richtung auf das größere Ende zum gegenseitigen Blockieren mit den Stufen der Bohrung geneigt sind.

3. Befestigungseinrichtung nach Anspruch 1 oder 2, dadurch gekennzeichnet, daß die Spreizhülse (10) zwei lösbare Elemente (10a, 10b) aufweist.

## Revendications

1. Dispositif de fixation pour revêtements de tunnels, comprenant une douille de serrage cylindrique (10) qui se compose de plusieurs éléments séparables (10a, 10b) maintenus élastiquement ensemble par un anneau-ressort (14) logé dans une gorge (13) qui encercle la douille de serrage, la douille de serrage présentant une forure (15) qui la traverse d'une première extrémité à l'autre extrémité et dont le diamètre diminue à partir de la première extrémité de la douille de serrage, une broche (17) ayant une forme conique complémentaire de celle de la forure et pouvant s'engager dans la forure, la broche pouvant pénétrer dans la forure dans le sens de la réduction du diamètre de façon à dilater la douille de serrage et des moyens étant prévus pour maintenir la broche dans une position de réglage voulue dans la forure pour résister à un déplacement de la broche dans le sens de son extraction de la forure en permettant une contraction de la douille de serrage, caractérisé en ce que la douille de serrage comporte, à ladite première extrémité, une tête élargie (11) de plus grand diamètre que le reste de la douille de serrage, ladite gorge encerclante (13) étant formée autour de la périphérie de cette tête de manière à recevoir l'anneau-ressort (14) qui maintient ensemble les éléments de la douille de serrage avant leur insertion dans une ouverture, et en ce que les moyens prévus sur la broche et dans la forure de la douille de serrage pour maintenir la broche dans une position de réglage voulue le long de la forure sont constitués par une multiplicité de moyens de butée à inter- verrouillage, espacés le long de la broche et de la forure de la douille de serrage de façon à s'enclencher les uns dans les autres et à résister au mouvement de la broche dans le sens de son extraction de la forure de la broche de serrage, la broche pouvant être ainsi enfoncée dans la forure conique de la douille de serrage pour dilater la broche de serrage après que celle-ci a été insérée dans une ouverture et les moyens d'interverrouillage retenant la broche dans la douille de serrage.

2. Dispositif de fixation pour revêtements de tunnels selon la revendication 1, caractérisé en ce que les moyens d'interverrouillage comprennent un certain nombre d'épaulements annulaires étagés (16) dans la forure conique (15) de la douille de serrage, espacés le long de cette forure et faisant face à l'extrémité élargie de celle-ci, ainsi qu'un certain nombre d'épaulements annulaires étagés correspondants (18) sur la broche conique (17), espacés le long de la broche et faisant face à la plus large extrémité de celle-ci, pour s'interverrouiller avec les épaulements formés dans la forure.

3. Dispositif de fixation pour revêtements de tunnels selon la revendication 1 ou 2, caractérisé en ce que la douille de serrage (10) comprend deux éléments séparables (10a, 10b).

*FIG. 1.*

*FIG. 2.*